# EUROPEAN PATENT APPLICATION

(11) **EP 3 572 217 A1**
(43) Date of publication of application: **27.11.2019**
(21) Application number: 18382355.8
(22) Date of filing: 24.05.2018
(51) Int. Cl.: B29C 70/88, B29C 70/58, B29C 64/165

(54) **A METHOD, A SYSTEM AND A PACKAGE FOR PRODUCING AN ELECTRICALLY CONDUCTIVE COMPOSITE**

(71) Applicant: Fundació Institut de Ciències Fotòniques, 08860 Castelldefels (Barcelona) (ES); Institució Catalana de Recerca I Estudis Avançats, 08010 Barcelona (ES)
(72) Inventor: STAVRINADIS, Alexandros, 08860 CASTELLDEFELS (ES); POWELL, Alexander, 08860 CASTELLDEFELS (ES); KONSTANTATOS, Gerasimos, 08860 CASTELLDEFELS (ES); QUIDANT, Romain, 08860 CASTELLDEFELS (ES)
(74) Representative: Ponti & Partners, S.L.P

(57) **Abstract**

The present invention relates to a method for producing an electrically conductive composite, that comprises:
a) providing a bed of a polymer (P) in a non-continuous solid form;
b) providing, on the polymer bed (P), a composition (C) that comprises a chemical precursor dissolved in a liquid medium made to inhibit a chemical reaction of the chemical precursor into forming an electrically conductive inorganic component;
c) forming an electrically conductive inorganic component from a chemical reaction of the chemical precursor, by at least evaporating the liquid medium; and
d) exposing to electromagnetic radiation an electromagnetic radiation absorber of the composition (C), to sinter those portions of said polymer bed (P) in thermal contact therewith, to form a polymer network (PN) that percolates an electrically conductive network (MN) formed with the electrically conductive inorganic component.

The system and the package are adapted to implement the method of the invention.

## Description

### Field of the invention

The present invention is in the field of conductive composites. In particular, the present invention relates to a method, a system, and a package for producing an electrically conductive composite, as well as to the obtained composite and of electronic devices including the composite.

### Background of the invention

Two-dimensional (2D) and three-dimensional (3D) printing of solid objects has numerous applications spanning from goods manufacturing to prototyping of industrial designs. A particular class of 2D and 3D printing technologies concerns the creation of electrically conductive 2D and 3D layers, or stripes, or patterns, as standalone objects, or components, of multi-component electrical or electronic devices. An example of such standalone object is a flexible electrically conductive tape, which can be used for electrically connecting two other objects attached to either ends of the tape. Some examples of complex objects that could contain 2D and 3D printed electrically conductive components are: RFID tags for remote tracking of consumer products and wearable electronic devices as disclosed in US8636220B2, electronic boards and spare parts of electronic devices as disclosed in US2006/0045962 A1, electronic sensors as disclosed in PLOS ONE, 2012, 7, e49365, 3D printed electromagnets and in general 3D objects that embody functional parts such as electrically conductive parts as disclosed in US2016/0198576 A1, EP2016/054282, or US2013/0303002 A1.

In the aforementioned prior art and scientific literature, the main reported methods for printing electrically conductive composites/objects and/or embodying them within complex objects and parts, can be categorized in two main groups.

In the first group, there is deposition of an ink composition, which contains inorganic but electrically conductive particles, on top of a preformed continuous plastic substrate, and the subsequent drying of the ink and sintering of the particles as to form a continuous and electrically conductive solid inorganic layer on top of the substrate. Typical methods for depositing the ink are: inkjet printing, screen-printing, offset lithography, flexography, gravure. Typical methods for sintering the as deposited ink are thermal heating through convection or electromagnetic irradiation of the deposited ink. For printing 2D electronics any of the aforementioned methods can be applied for depositing the ink on a preformed plastic substrate. US2006/0045962A1 describes the formation of 2D and 3D conductive patterns via deposition of droplets of a metallic ink on top of a substrate followed by electromagnetic irradiation. EP3271161A1 describes the deposition of an ink on top of preformed and continuous skeleton matrix. In this case, the as formed metallic pattern is part of a 3D object, which consists of both the skeleton matrix and the conductive pattern, but these two parts, or subparts of them, are not formed simultaneously and through a single process. While this method allows for successive deposition of skeleton and conductive layers as to eventually form complex objects that entail within them electrical conductors, it is a complex method because the deposition of the metallic ink and the subsequent formation of the conductive pattern, typically requires the pre-existence of a plastic skeleton or plastic surface/substrate. This happens because a skeleton or substrate is required for confining the ink at a specific location or surface at which the concentration of the metallic nanoparticles will be high enough for them forming a conductive network. In addition, after the deposition of the ink and the formation of the conductor, subsequent depositions of additional plastic layers that will encapsulate the conductive pattern are also required. This is often required for encapsulating the printed conductor with plastic as to either provide electrical insulation at certain points of the conductor, protect the conductor from environmental corrosion, protect it from mechanical stress, prevent delamination of it from the surface on which it was deposited. Due to these drawbacks, EP3271161 A1 describes the deposition of an ink within channels at the substrate or the skeleton of a 3D printed object. These channels are purposely formed before or after the deposition of the ink, for either spatially confining the ink and the subsequently the final conductive pattern, and for providing mechanical and electrical encapsulation of the finally formed conductor.

The second group concerns the deposition of a preformed polymer-inorganic conductive particle composite on top of a substrate. In the latter case, the inorganic particles, which have been synthesized before mixing them with the polymer, form a network within the polymer matrix of the composite, and the concentration of these particles within the composite, is high enough as to allow inter-particle physical contact and thus, electrical conduction along the particle network of the composite. An example of this method is presented in PLOS ONE, 2012, 7, e49365, where Carbon Black (CB) particulates are mixed with polycaprolactone which is a polymer. In this composite, CB is the filler which provides for the electrical conductivity of the final product, and the filler concentration has to be high (15wt% in the aforementioned reference) in order for the CB particulates to form a conductive network throughout the composite. The composite is deposited (printed) via the fused filament fabrication method. This technology has several drawbacks: it is complex because it requires the fabrication of the conductive inorganic particles before making the composite, it requires the formation of the composite before printing it, and it requires a high concentration of particles in the final composite.

Therefore, there is still the need to provide a new method for producing electrically conductive composites. The method of the instant invention is not categorized in any of the aforementioned groups nor does it suffer from their aforementioned drawbacks.

### Summary of the invention

To that end, the present invention relates, in a first aspect, to a method for producing an electrically conductive composite, which, in contrast to the methods known in the prior art, comprises, in a characterizing manner:
a) providing a bed of a polymer in a non-continuous solid form, generally in the form of powder or granules;
b) providing a composition on at least a region of said polymer bed to wet and disperse across at least part of the thickness of the polymer bed, wherein said composition comprises a chemical precursor dissolved in a liquid medium, wherein said liquid medium is made to inhibit a chemical reaction of said chemical precursor into forming an electrically conductive inorganic component, and wherein at least one of said composition, by-products formed therefrom, said chemical precursor, and said electrically conductive inorganic component is an electromagnetic radiation absorber;
c) forming said electrically conductive inorganic component from a chemical reaction of the chemical precursor, by at least evaporating said liquid medium, wherein said electrically conductive inorganic component forms an at least partially continuous electrically conductive network; and
d) exposing to electromagnetic radiation at least said electromagnetic radiation absorber, to photothermally generate heat to sinter at least those portions of said polymer bed in thermal contact therewith, to form an at least partially continuous polymer network, wherein said at least partially continuous electrically conductive network and said at least partially continuous polymer network at least partially percolate each other.

Preferably, the composition is deposited on at least said region of the polymer bed by droplet deposition.

According to an embodiment, the above mentioned formation of the electrically conductive inorganic component of step c) further comprises heating solid residues formed from the chemical precursor upon said evaporation of the liquid medium, wherein said solid residues contain said electrically conductive inorganic component and non-electrically conductive elements, to at least partially break down said solid residues and remove said non-electrically conductive elements therefrom.

For an implementation of said embodiment, at least part of step c) is performed simultaneously to step d), so that at least heat used for said heating of said solid residues is obtained from said photothermal heat generated by the electromagnetic radiation absorber.

For a variant of said implementation, all of step c) is performed simultaneously to step d), so that also heat used for the evaporation of the liquid medium is obtained from the photothermal heat generated by the electromagnetic radiation absorber.

For an alternative implementation of the above mentioned embodiment, steps c) and d) are performed sequentially, so that the electromagnetic radiation absorber exposed to electromagnetic radiation at step d) is the electrically conductive inorganic component formed at step c).

For an embodiment, the method of the first aspect of the invention comprises, prior to the application of the electromagnetic radiation of step d), a controlled pre-heating of the polymer bed (before, during and/or after step b)) to a temperature below the sintering temperature of the polymer, by any kind of heating means, for example from electromagnetic radiation absorbed by the polymer, such as Infrared radiation.

For an embodiment, the above mentioned pre-heating at least collaborates in the evaporation of the liquid medium of the composition at step c).

According to an embodiment of the method of the first aspect of the invention, the electrically conductive inorganic component comprises a plurality of inorganic particles, the method further comprising at least one of aggregating, sintering, and annealing said inorganic particles to form the at least partially continuous electrically conductive network, from heat applied at step c) and/or from the photothermal heat generated by the electromagnetic radiation absorber.

For some embodiments, the chemical precursor is in form of solvated individual metal atoms or ions or/and in form of molecular metallic complexes into which metal is locked-up and there are no particles present.

Preferably, the composition is partially or fully transparent to visible light.

All the above alternative embodiments, regarding the sequential or simultaneous implementation of steps c) and d), come from the fact that formation of the electrically conductive inorganic component from the chemical precursor depends on different factors, as will be explained below for some embodiments.

For an embodiment, when the composition is deposited at step b) and the liquid medium evaporates, some particles of inorganic nature generally form at this point, but there will still be a lot of organic material present and electric conductivity will be low. To remove the organic material and release the rest of the inorganic material (generally metal), the mixture must be heated above the evaporation temperature of the organic part of the chemical precursor. Once this "crucial" temperature is reached, the rest of the inorganic material is released and inorganic particles with good electrical conductivity are formed, although there might still be some organic material around.

The complicated part is that this crucial temperature varies a lot depending on the chemistry (anywhere between 90-250 ºC according to the literature). So depending on the embodiment, all the inorganic/metal material may be created immediately after deposition on the polymer bed of the composition at step b) from heat coming from the polymer, or it might require further heating, such as photothermal heating from electromagnetic illumination, to reach the required temperature. So in some cases the electromagnetic radiation will form the electrically conductive inorganic component, then heat it to sinter the polymer, while in other cases, the temperature of the powder bed (usually > 150 °C) will have converted the electrically conductive inorganic component already, and the electromagnetic radiation will only be heating it to sinter the polymer. However, in any process there will generally be some organic residue left which additional heating can be said to help remove, although this may be negligible in technical terms.

Preferably, the electromagnetic radiation absorber is made to absorb, compared to the polymer, at least two times more strongly the electromagnetic radiation to which is exposed at step d).

For an embodiment, the electromagnetic radiation absorber is not optically resonant.

For an alternative embodiment, the electromagnetic radiation absorber is optically resonant to at least a specific wavelength, so that when exposed at step d) to an electromagnetic radiation having said specific wavelength, the electromagnetic radiation absorber optically resonates to heat up.

In a non-limiting list of examples, such resonance can be generated by electronic transition effect, plasmonic effect, Mie effect, and/or whispering gallery mode effect.

Depending on the implementation of said alternative embodiment, the above mentioned specific wavelength is that at which the electromagnetic resonant absorber has a resonant peak, whether its strongest resonant peak or not, and/or a wavelength included at least in its absorption resonance spectra.

In the present invention, the electromagnetic radiation to which at least the electromagnetic radiation absorber is exposed in step d) can be in the form of microwaves, visible light, UV, NIR, or mid-IR of far-IR electromagnetic waves, or a combination thereof. A non-limited list of such radiation sources can be: laser, LED, halogen lamps, IR-lamps.

Ideally, that electromagnetic radiation can be of a wavelength range covering the whole spectrum of the blackbody radiation, including a wavelength range from 250nm to 4000nm, and preferably from 350nm to 2000nm since radiation of such wavelengths is usually not absorbed strongly by the polymers used in the electrically conductive composites.

In any case, the electromagnetic radiation is selected to emit in a wavelength range that at least in part overlaps the absorption wavelength of the electromagnetic resonant absorber.

The electromagnetic radiation can be a radiation of a multiple of wavelengths where at least some of them are absorbed by the electromagnetic radiation absorber.

Although, for an embodiment the method of the first aspect of the present invention is intended to produce a composite comprising only one layer (or slice), for another embodiment the percolated polymer and electrically conductive networks form a base layer of the composite, and the method comprises producing a three-dimensional object using a layer-by-layer deposition process, by repeating a step a) of providing at least a further bed of a polymer in a non-continuous solid form over said base composite layer, and repeating steps b), c) and d) with respect to said further polymer bed.

For an embodiment, the polymer bed is provided on a substrate, such as a plastic substrate or skeleton structure.

Since, with the method of the first aspect of the invention, for an embodiment, the polymer and the material forming the electrically conductive inorganic component are sintered at the same time, good adhesion to any existing "soft" sacrificial surface, such as the above mentioned plastic substrate or skeleton structure, can be achieved.

Alternatively, the polymer bed is not provided on any substrate or on substrate only used for the manufacturing process, so that once the electro conductive composite is obtained, it is taken off the substrate as a free object, so that it can be manipulated without the substrate.

The first aspect of the present invention provides a method capable of forming, for an embodiment, electrically conductive inorganic particles responsible for the conductivity of the composite and simultaneously sintering the polymer component, thereby providing a conductive flexible organic-inorganic composite in a simple and single process.

Advantageously, the obtained electrically conductive composite retains to a significant degree the mechanical properties of polymer starting material, thus being flexible and robust under external mechanical stress, mainly because the formed electrically conductive network, at least in part, interpercolates with the polymeric network. Therefore, the problems of the prior art, among others the delaminating between the two independent layers, one conductive and another polymeric, are solved.

Moreover, the method of the first aspect of the present invention is suitable for producing electrically conductive composites with a higher thickness than those of the prior art. Particularly, the composites produced with the methods disclosed in the state of the art do not exceed thicknesses of 100-200 microns.

Advantageously, the method of the first aspect of the invention is capable of modulating the electric conductivity value of the obtained electrically conductive composite. When a particular conductivity value in the obtained electrically conductive composite is desired, steps b), c) and d) can be repeated, so the volume of the electrically conductive network in the produced electrically conductive composite can be controlled. The more times the steps b), c) and d) are repeated, the conductivity will be higher in the produced composite. Therefore, the method of the first aspect of the present invention is also suitable for modulating the conductivity of the produced electrically conductive composite. Alternatively or complementarily, for an embodiment, the conductivity value can be also tuned by varying the concentration of the metal atoms and/or metal ions present in the chemical precursor in the composition.

Advantageously, steps a) - d) are simple and they can be automated, so the method of first aspect of the invention is suitable for industrial scale.

In the present invention, the term "polymer" in a non-continuous solid form means a polymer material in powder or particulate form that does not significantly dissolve and swell, that is, their volume is not altered significantly by the presence of a solvent.

By significantly dissolve and swell, it is understood that the volume of the powder/particulate polymer is not altered by more than 50% by the liquid medium included in the composition. The polymer in powder or particulate form do not carbonize at the temperatures of the electromagnetic radiation step d). A non-limiting list of polymer materials are: Polylactic Acid (PLA), Acrylonitrile Butadiene Styrene (ABS), PolyAmide (PA), High Impact Polystyrene (HIPS), Thermoplastic Polyurethane (TPU), other thermoplastic elastomers, other thermoplastics polymers.

According to the present invention, the "inorganic particles", which, for an embodiment, can be formed in step b), as part of the electrically conductive inorganic component, have an average particle size from 0.5 nm to 5 microns, preferably from 1 nm to 1 micron, still most preferable from 2 nm to 100 nm. If there is self-sintering, i.e. if the inorganic particles sinter to each other, particles of a bigger size can be formed. The inorganic particle is generally of a material that is a metal or a metalloid. Preferable, the material is selected from silver, copper, tin, lead, bismuth, antimony, indium, as well as any combination thereof.

Below, the steps of the method of the first aspect of the invention are detailed described, for some embodiments.

### Step a):

The provision of the polymer bed can be performed by any process suitable for providing a polymer bed on a surface, such as by deposition. It is essential that the polymer be in a non-solid form, such as a powder or particulate form.

Appropriate conditions for deposition of the powder or particulate polymer bed on a surface are of general knowledge for a person skill in the art.

The thickness of the powder or particulate polymer bed can be ranged from 0,0001 to 1 cm. In an embodiment, the polymer bed thickness ranges from 0.01 to 0.5 mm.

### Step b)

The method provision at step b) of the composition on the polymer bed to wet and disperse across at least part of the thickness thereof can be carried out by any process suitable for wetting a powder. As state above, preferably, the provision of the composition is carried out by droplet deposition.

In this step, it is preferred that the composition disperses across the entire thickness of the polymer bed. In general, appropriate conditions for wetting a powder/particulate polymer bed are known to the skilled person in the art.

In order to wet the polymer bed, the composition must either behave as hydrophobic if the polymer is hydrophobic, or the composition must behave as hydrophilic if the polymer is hydrophilic. The hydrophobic or hydrophilic property of the composition is primarily controlled by the choice of a liquid medium having a determinate polarity, or by optionally using mixtures of liquid mediums of different polarities. As a general but not limiting rule, for achieving good wetting of hydrophobic polymers the liquid mediums of the composition must be non-polar ones or of low polarity, and for achieving good wetting of hydrophilic polymers the liquid mediums of the composition must be polar ones or of high polarity.

The wetted polymer bed is named herein "ink-polymer composite", which is in fact a mixture of the polymer and the composition. Once the composition is deposited on the polymer, the liquid medium of the composition starts to evaporate spontaneously, for an embodiment for which the polymer bed is pre-heated enough. However, this evaporation can be forced by drying the ink-polymer composite. As stated above, the evaporation of the liquid medium results in the formation of an inorganic material (inorganic component) that includes one or more of a solid residue, inorganic particles, chemical intermediates and by-products thereof, which remain in the ink-polymer composite.

Therefore, for an embodiment, the method can further comprise an additional step of drying in order to fully or partially dry the ink-polymer composite, and thus to evaporate the liquid medium prior to carry out the electromagnetic radiation step.

For an embodiment, the composition comprises a liquid medium comprising an organic solvent or a mixture of organic solvents and an inorganic (generally metallic) element source dissolved in the solvent. The inorganic element source dissolved in the solvent is in form of solvated individual atoms or ions and/or in form of molecular complexes dissolved in the solvent(s). The complexes can be inorganic such as inorganic salts of the inorganic element and/or organometallic such as complexes containing an organic group of elements bonded with at least one atom, which can appear as a cation, of the inorganic element (generally, a metal), or combinations thereof. The composition can further include at least one or more organic or inorganic substances that may form further molecular complexes with the inorganic element source in dissolution. The molecular complexes are stable at room temperature (20°C), which means that they stay dissolved and do not decompose for a minimum period of 30 minutes once the composition is prepared and stored in dark and at room temperature.

### Step c)

During step c) of forming the electrically conductive inorganic component, depending in the embodiment, the above mentioned molecular complexes may decompose towards directly forming inorganic particles, or towards forming a, inorganic/metal-precursor solid residue when the composition is deposited on the polymer bed and the liquid medium or solvent of the composition is evaporated.

The composition can be any commercial inorganic/metal-precursor ink composition with the proviso that it does not contain metallic clusters (aggregates). The composition can be also prepared before use it. Additional molecular ink compositions that can be used in the present invention can be found in WO2013/096664.

### Step d)

Step d), which as described above can be performed at least in part simultaneously with step c) and/or at least in part sequentially after step c), comprises electromagnetically radiating the ink-polymer composite. Preferably, the electromagnetic radiation is a light irradiation.

The optical absorption of such radiation may happen via any of the known optical absorption mechanisms, such as those already described above.

For those embodiments for which step c) is performed at least in part simultaneously with step d), i.e. for which the electrically conductive inorganic component has not yet been obtained or at least not yet fully obtained when initiating step d), the absorption of the electromagnetic radiation may result to direct decomposition of the photon absorbing species (called above electromagnetic radiation absorber) of the composition into forming electrically conductive inorganic materials, or/and result to an increase of the temperature of the absorbing species and of the materials that surround these species, so that the electrically conductive inorganic component is finally obtained from the chemical precursor.

The absorption of the electromagnetic radiation by the electromagnetic radiation absorber photothermally generates heat that, by means of neighboring diffusion temperature effect, is transferred to the polymer particles in thermal contact thereto so that the polymer sinters.

As already stated above, the required temperature to fully convert the inorganic material of the composition in metallic inorganic particles depends on the own chemistry of such inorganic material. However, such temperature usually is between 90 and 250°C. The diffusion temperature is enough to sinter the polymer particles in thermal contact with the inorganic particles, thereby forming a polymeric network that entangles an electrically conductive network, the two networks being at least partially percolated to each other.

As stated above, optionally, the formed inorganic particles can be sintered too (and/or aggregated and/or annealed) when the temperature rise is enough to partially melt the material of these inorganic particles, with the proviso that such temperature rise do not carbonize, nor destroy the polymer component by neighbouring diffusion temperature effect.

It is of general knowledge of a skilled person in the art that several of the characteristics of the electromagnetic radiation such as its wavelength, wavelength range, spectral profile, intensity, phase, temporal profile, and other characteristics may be controlled for optimizing its functionality within the scope of the present invention.

Therefore, electromagnetic radiation intensity can be tuned for controlling the heating rate of the electromagnetic radiation absorber, for controlling the formation rate of inorganic particles, an/or for varying the temperature value of the inorganic particles, for example, to sinter them. The intensity can be also used to indirectly control the temperature value that by neighbouring diffusion effect attains the polymeric component.

For an embodiment, the method of the first aspect of the invention is a 2D or 3D printing method (implementing techniques such as selective laser sintering (SLS) or high speed sintering (HSS)), providing at step b) the composition in the form of an "ink" composition. In that sense, the method for producing an electrically conductive composite of the first aspect of the invention is also named in the present document as a method for printing electrically conductive composites or objects.

In a second aspect, the present invention relates to a system for producing an electrically conductive composite, wherein the system comprises:
- at least one supplier device for providing:
   - a polymer bed in a non-continuous solid form; and
   - a composition on at least a region of said polymer bed to wet and disperse across at least part of the thickness of the polymer bed, wherein said composition comprises a chemical precursor dissolved in a liquid medium, wherein said liquid medium is made to inhibit a chemical reaction of said chemical precursor into forming an electrically conductive inorganic component, and wherein at least one of said composition, by-products formed therefrom, said chemical precursor, chemical intermediates, and said electrically conductive inorganic component is an electromagnetic radiation absorber;
- a supply of polymer in a non-continuous solid form and a supply of said composition, to feed said at least one supplier;
- evaporating means for evaporating said liquid medium, to at least collaborate in forming said electrically conductive inorganic component from a chemical reaction of the chemical precursor, to form an at least partially continuous electrically conductive network with said electrically conductive inorganic component;
- a controllable electromagnetic radiation source for exposing at least said electromagnetic radiation absorber to electromagnetic radiation, in order to photothermally generate heat to sinter at least those portions of said polymer bed in thermal contact therewith, to form an at least partially continuous polymer network, wherein said at least partially continuous electrically conductive network and said at least partially continuous polymer network at least partially percolate each other; and
- at least one controller adapted to control said at least one supplier device to provide said polymer bed and said composition, and said controllable radiation source to emit said electromagnetic radiation to expose the electromagnetic radiation absorber.

The system of the second aspect of the present invention is adapted to implement the method of the first aspect, for all the embodiments of the method that are described in the present document.

Generally, the above mentioned at least one supplier are two suppliers, one for supplying the polymer bed and another for supplying the composition.

For an embodiment, the system of the second aspect of the invention is a 3D printer (implementing techniques such as selective laser sintering (SLS) or high speed sintering (HSS) using inkjet heads to provide the composition in the form of an "ink" composition) which comprises also well-known features common to conventional 3D printers (such as movables carriages, ejection systems, actuation and driving mechanisms including electric motors, electric and electronic systems, etc.), which are not described herein in detail to avoid obscuring the present invention.

For an embodiment, the above mentioned at least one controller includes a memory, program code residing in the memory, and a processor in communication with the memory and configured to execute the program code to generate control signals to apply to at least the controllable electromagnetic radiation source and to the at least one supplier device, to carry out the control of the operations thereof.

Depending on the embodiment, the evaporating means of the system of the second aspect of the invention are implemented by the above mentioned controllable electromagnetic radiation source (where the heat used for the liquid medium evaporation is obtained from the photothermal heat generated by the electromagnetic radiation absorber) and/or comprises one or more other heaters, such as the above mentioned heating means for the polymer powder pre-heating (where heat coming from the pre-heated powder be causes the evaporation of the liquid medium once the composition is provided thereon) or a specific heater for performing only the evaporation step.

The present invention also relates, in a further aspect, to a computer program, comprising computer program components including code instructions that when executed on one or more processors of the at least one controller of the system of the second aspect of the invention implement the above mentioned generation of control signals (in digital form, to be converted to electrical signals) to carry out the control of the operations of the controllable radiation source and of the at least one supplier device.

A third aspect of the present invention relates to a package for producing an electrically conductive composite, wherein the package comprises, enclosed therein, a composition that comprises a chemical precursor dissolved in a liquid medium, wherein said liquid medium is made to inhibit a chemical reaction of said chemical precursor into forming an electrically conductive inorganic component, wherein at least one of said composition, by-products formed therefrom, said chemical precursor, chemical intermediates, and said electrically conductive inorganic component is an electromagnetic radiation absorber, and wherein the package is configured and arranged to cooperate with the at least one supplier device of the system of the second aspect of the invention for providing the composition by extracting the same from the package.

For an embodiment, said package is an ink print cartridge and the composition is in the form of an ink for a 3D printing system.

Said ink print cartridge comprises also well-known features common to conventional ink print cartridges (such as an ejection system electrically controlled to eject ink, including one or more ink nozzles and associated electric circuitry, etc.), which are not described herein in detail to avoid obscuring the present invention.

In a further aspect, the present invention relates to an electrically conductive composite obtained by the method of the first aspect of the invention, provided with an at least partially continuous polymer network and an at least partially continuous electrically conductive network, wherein the two networks, at least partially, percolate each other.

The electrically conductive composite thus obtained has improved properties, particularly the fact that it is more flexible and robust under external mechanical stress compared with the conductive composites of the state of the art. Moreover, it can be prepared with a desired thickness and conductivity.

The electrically conductive composite is provided with an at least partially continuous polymer network and an at least partially continuous inorganic network, the two networks at least partially percolating each other.

Advantageously, the electrically conductive composite can be prepared in two dimensions or three dimensions and it can be an object or a part of an object with the desired end design.

In an embodiment, the electrically conductive composite is an object that has a thickness between 0.01mm and 0.1 m.

The electrically conductive composite may have a zigzag design and/or it may be produced as a stripe.

In a further aspect, the present invention is also directed to the use of the electrically conductive composite of the invention as an electronic component in the electronic field. Thus, the electrically conductive composite can be used in various applications, such as: electronic and micro-electronic devices and systems, wearable electronics, electrical appliances and systems, electromagnetic devices and systems, electromagnetic shields.

A further aspect of the present invention relates to an electronic component or device comprising the electrically conductive composite of the invention.

### Brief Description of the Drawings

In the following some preferred embodiments of the invention will be described with reference to the enclosed figures. They are provided only for illustration purposes without however limiting the scope of the invention.
Figure 1 depicts a schematic and simplified view of the steps of the method of the first aspect of the present invention, for an embodiment.
Figures 2a to 2e schematically shows also the steps of the method of the first aspect of the invention, but for a more detailed embodiment than that of Figure 1.
Figure 3 shows a graph of the electrical resistance (Ohm) measured *versus* the length across a printed PA12-Ag composite stripe of 5 mm width according to Example 1 described below.

### Detailed Description of the Invention

Hereinafter, some embodiments associated to different modes for carrying out the present invention are described in detail.

A new method for printing/obtaining electrically conductive two-dimensional (2D) or three-dimensional (3D) objects is provided, which can be used as stand-alone conductors of electricity or as electrical components of more complex 2D and 3D objects. The obtained electrically conductive objects are composites made of plastic and inorganic materials, and the composites and final objects carry some beneficial properties from both parts of the composite, namely: they are flexible and robust like the polymer and they also are electrically conductive like the inorganic material. Compared to previous methods for printing similar objects, the invention method is simpler and can be used for 2D and 3D printing of electrically conductive objects. In addition, the claimed method is easy to integrate with complementary processes for 2D and 3D printing of various other materials.

Moreover, the method according to the first aspect of the present invention can be applied for the fabrication and production of consumer electronics, electrical appliances and electrical and electronic components of such devices and systems.

The method can be summarized as follows, for an embodiment: a precursor ink composition, which contains metal atoms and/or molecular organometallic complexes dissolved in a liquid medium/solvent, is deposited on and diffuses throughout a bed of powder polymer, which thus form a mixture. Electromagnetic irradiation is then applied to the powder-ink mixture, which is preferentially absorbed by one or more of the components of the ink composition, or any of its products, intermediates and by-products, and results to formation of electrically conductive inorganic particles, sintering of the polymer, and optionally sintering of the particles, and then the formation of a polymer/inorganic particle network which is electrically conductive. It is emphasized that the absorption of the electromagnetic radiation and generation of heat by the polymer are negligible. The method steps can be repeated several times in the context of 2D and 3D printing of electrically conductive objects. This method can further be combined with other 2D and 3D printing technologies.

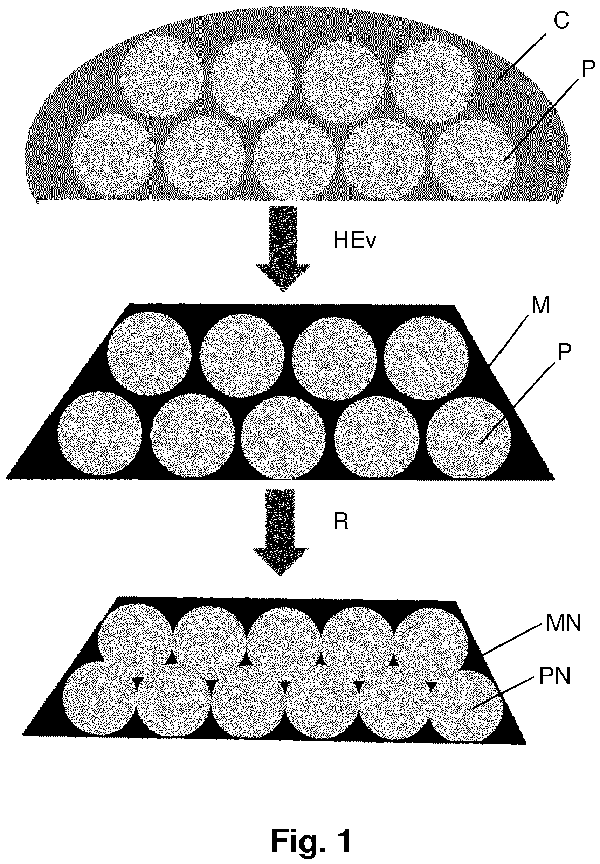

More detailed, the printing method starts with the deposition of a thin polymer powder bed on a surface and is followed by the deposition of the ink composition on top of a thin layer of the polymer powder as shown in Figure 1 (first image), where the ink composition has been identified with reference C and the polymer powder particles with reference P. The ink composition is preferentially being deposited in the form of droplets. The powder polymer layer, once deposited on the surface, is a non-continuous solid and consequently its morphology is not preserved when a significant mechanical stress is applied to it since the powder polymer particles in the layer are not bounded and attached to each other at this step of the method. When the ink composition is deposited onto the powder polymer layer, the former wets the latter and disperses across part of the upper surface of the powder layer as well as throughout the cross section on the powder polymer layer. The volume and geometrical characteristics of the part of the powder polymer layer that is wet by the ink composition, such as the shape and the total upper surface area of the wet area, and the thickness of the cross section that is wet, depends on the volume of the ink being deposited. The latter further depends on the number and size of the droplets and the volume of each individual droplet. In addition, the volume of the powder polymer layer that is wet by the ink composition and its geometrical characteristics, such as its shape and the total surface area, also depends on the viscosity of the ink and its wetting and chemical affinity to the surface of the polymer particles. The method works when the ink composition does wet the surface of the polymer powder particles. Preferably, the ink composition has to disperse across the entire thickness of the powder polymer layer. Therefore, all of the aforementioned parameters are engineered as to achieve the desired wetting behaviour.

The ink composition in its original form, and until it is deposited on the powder polymer layer, contains atomic and molecular species which can act as precursors for the subsequent formation of inorganic and electrically conductive solids. These atomic and molecular species may be metal atoms, metal salts and organometallic complexes dissolved in a liquid solvent or mixture of liquid solvents capable of inhibiting the reaction of the precursors into forming inorganic conductive particulates or large conductive solids. This is an important difference compared to any other printing methods which rely on the deposition of preformed inorganic conductive particles such as a silver ink containing silver flakes.

After the removal of the liquid medium/solvent, which, for an embodiment, starts to happen after the deposition of the ink composition due to slow or fast evaporation depending on the temperature of the system, the precursors may or may not react at room temperature to form metallic inorganic particles. Therefore, as further shown in Figure 1 (second image) and indicated by reference HEv, after the deposition of the ink composition, the powder-ink mixture can be optionally heated to accelerate the evaporation of the ink composition's liquid medium/solvent and that may further result to formation of metallic inorganic particles, such as silver if the ink contains silver atoms, dispersed throughout the powder polymer layer. Those inorganic particles are schematically shown in the second image of Figure 1 and identified with reference M. Nevertheless, it must be noted that generally the temperature at which the mixture may be heated in this step, is not sufficiently high to result to sintering of the particles of powder polymer. Therefore, up to this step, the printing method is not complete, and the composite is not still finished.

The method is completed, for an embodiment, by irradiating the ink-polymer composite with electromagnetic radiation, as indicated with reference R in Figure 1, which is absorbed by the ink composition or any of its products, intermediates and by-products which could have been formed up until the radiation is applied. The wavelength and intensity of the electromagnetic irradiation is chosen as to preferentially or completely be absorbed by one or more component of the deposited ink composition, or any of its products, chemical intermediates, such as solid residues that are left after the ink composition's liquid medium/solvents are evaporated, and by-products, such as any metallic inorganic particles formed after the ink composition has been deposited. Upon absorbing the electromagnetic radiation, the ink composition, its solid residue, products (inorganic particles), intermediates, and/or any of its by-products are heated, via a photo-thermal effect, to a temperature which coincides or exceeds the sintering temperature and/or melting temperature and/or glass transition temperature of the particles of powder polymer. This induces sintering of the polymer particles, meaning that they become interconnected forming a polymer network identified in Figure 1 with reference PN.

The aforementioned photo-thermal effect also results to reaction of the precursors of the ink composition into forming inorganic electrically conductive solids or solid particulates which form an at least partially continuous inorganic network, identified in Figure 1 with reference MN, that is dispersed throughout the sintered polymer particles. In fact, the photo-thermal effect may also result to sintering, aggregating and/or annealing of any inorganic particulates that may have been formed prior to or during the application of the electromagnetic irradiation. This results to an increase of the electrical conductivity of the inorganic network. In addition, the photo-thermal effect may result to evaporation of any unreacted by-products of the ink composition or of any remaining organic contents of the ink composition, and this further improves the conductivity and elemental purity of the inorganic network. The intensity of the applied radiation and duration of the irradiation process are adjusted as to maximize the aforementioned effects related to sintering of the polymer particles, and, optionally, to sintering, aggregating and/or annealing of the inorganic solids. When the electromagnetic irradiation stops, the system cools down and the composite is complete. In its final form the composite consists of two inter-percolated networks: an at least partially continuous polymer network and an at least partially continuous inorganic and electrically conductive network. The overall composite is both flexible and mechanically robust which are qualities similar to the ones of the polymer network, and electrically conductive which is a quality similar to the one of the inorganic network.

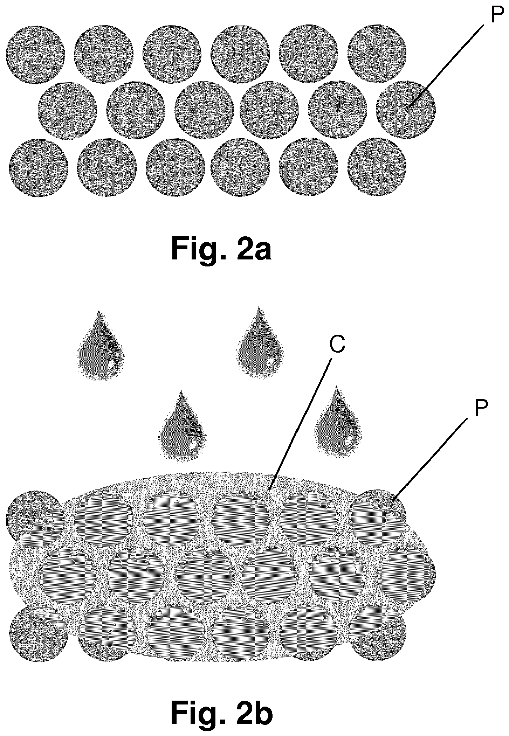

A graphical representation of the steps of the method of the first aspect of the invention, for a more elaborated and realistic embodiment than that of Figure 1 is shown in Figures 2a to 2e, and is described below.

Starting by Figure 2a, there step a) of the method of the inventions is illustrated, where a polymer powder P is deposited or otherwise prepared, whether at room temperature or at higher temperatures. Any temperature beneath the sintering temperature of the polymer powder is valid.

Step b) is depicted in Figure 2b, where an ink composition C containing metal complexes is deposited onto the polymer powder P. The ink composition C is designed to wet and coat the polymer powder P. No chemical change has occurred yet.

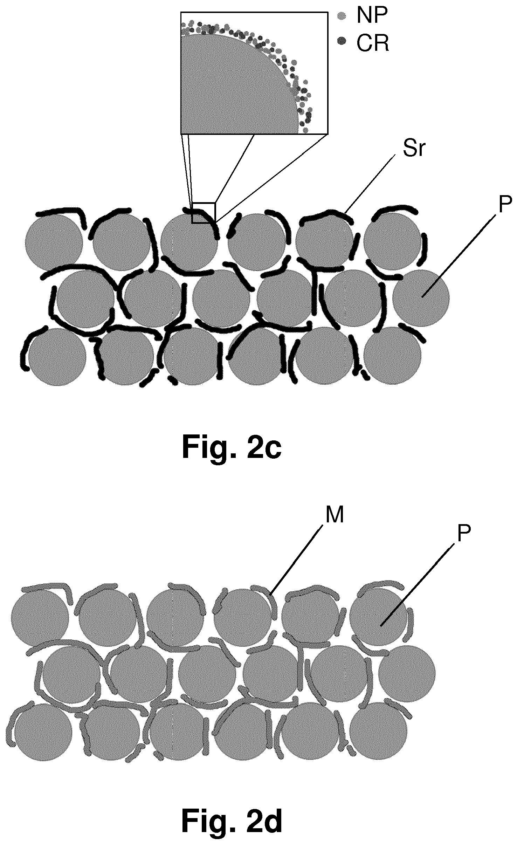

Figure 2c shows a situation which, for the illustrated embodiment, corresponds to part of step c), as although the evaporation of the liquid medium/solvent occurs, the electrically conductive inorganic component is not yet fully formed. Particularly, Figure 2c shows how once the ink composition has been evaporated, some (or all) of the metal complexes may decompose to form metal nanoparticles NP for some types of precursor, and some (or all) of them form a solid residue CR of the complex (could be organic or inorganic). Said nanoparticles NP and complex solid residue CR for a solid residue SR that may include other impurities. The network of metal nanoparticles NP (if they have formed here) is not continuous, and contains much non-metallic components. This reduces conductivity, so once all the liquid medium/solvent of the ink composition is evaporated further heat is required to remove the non-metal residue.

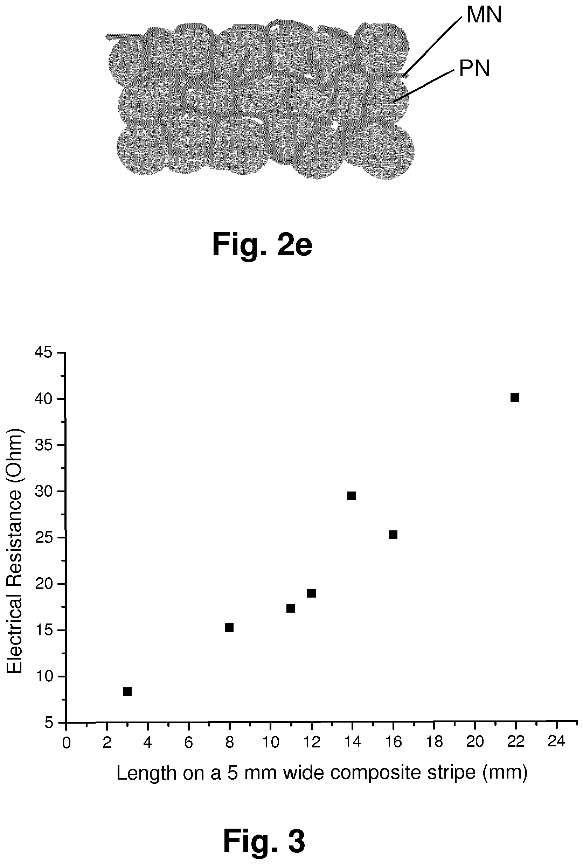

Figures 2d and 2e show the rest of steps of the method of the first aspect of the invention, for the illustrated embodiment, and can be performed simultaneously or sequentially (in the order illustrated).

Figure 2d shows part of step c), specifically how the metal complexes break down via the above mentioned further heating. That further heating could be due to the temperatures of the polymer powder (often > 150 ºC for 3D printing) or from photothermal heat coming from incident light, which is absorbed by the solid residues SR. Due to the further heating the solid residue SR is broken down and the non-metal element is removed, leaving only metal nanoparticles NP. These metal nanoparticles NP may aggregate or anneal to form a more continuous network.

At Figure 2e, step d) has been applied, i.e. the sample (the composite being formed) is exposed to electromagnetic radiation, generally light, that is absorbed by the metal/solid residue (could be either or both at this stage, depending mainly if the step of Figure 2e is performed after or simultaneously to that of Figure 2d), which according to a photothermal effect heats up and transfers heat to the polymer powder P. Heat is enough to melt polymer powder P, which sinters to form an at least partially continuous network PN. Heat may also further sinter or anneal the metal particles NP together, forming or improving an already formed, if so, metal network MN.

Hence, a composite is produced that includes an electrically conductive metal-polymer interjoined network, formed by a metal network MN percolated with a polymer network PN.

As stated above, to improve conductivity, more ink composition C may be added to the polymer powder P, and to create a 3D object all steps can be repeated the desired number of times.

The morphology of the final composite will depend on the morphology of the initial powder bed, the volume and deposition area of the ink composition, and the morphological changes that will be induced by the sintering process. Generally, the planar morphology of the initial powder polymer bed/layer is preserved and translated to a planar morphology of the final conductive composite. The dimensions and shape of the final sintered composite depend on the shape and dimensions of the powder polymer area which was wet by the ink composition. Therefore, by wetting, with the ink composition, the powder polymer bed across an area of a simple or complex shape, such a square, or a circle, or a stripe or any more complex two dimensional pattern, the method according to the first aspect of the invention can result to the ultimate formation of a composite pattern.

Since the sintering process happens only across the area and volume which is wet by the ink composition and irradiated by electromagnetic radiation, the final sintered object, which is a solid and continuous object, can be removed from or cleaned from the surrounding materials which were not wet by the ink composition and/or were not irradiated by the external electromagnetic irradiation. That allows for at least two variations of 2D printing using the method of the invention: one where the printed pattern is determined by the pattern of the irradiated layer, and one where the printed pattern is determined by the deposition pattern of the ink composition. A combination of these two variations is also possible.

If the conductivity of the printed object is not high enough, e.g. due to insufficient amount of ink composition being mixed with the powder polymer as to fill all the free volume within the polymer layer, then more ink composition can be deposited after the first deposition and before or after the irradiation of the ink-polymer mixture/composite, as to transform it into a solid composite, that is a 3D composite. In such case, the composite can be irradiated with electromagnetic radiation more than one times, e.g. every time after deposition of the ink composition. This process can be repeated several times. 3D printing of conductive objects, or of conductive parts of more complex objects, can be made through repetition of the method steps a) to d), meaning that after a conductive composite has been formed, that is steps a) to d) have been carried out, then, a new powder polymer layer can be deposited on top, ink composition is then deposited on this new or second powder polymer layer, the ink-polymer mixture/composite can be optionally heated, and then it is irradiated with electromagnetic irradiation. This process can be repeated several times in the context of the additive manufacturing which is a well know concept in the prior art.

The method according to the first aspect of the present invention and any obvious variations of it can be combined, in a successive manner, with other additive manufacturing methods for making complex objects that contain, only partially, electrically conductive components which are made with the method of the present invention. The electrically conductive objects produced/printed via the method of the first aspect of the present invention can be selectively detached from the surfaces on which they are attached to during and after printing, so as to become free standing objects.

On the other side, an electrically conductive produced/object printed according to the present invention can be prepared as illustrated below in its preparation example in Example 1.

### Examples

Hereinafter, the present invention is described in more detail and specifically with reference to the Examples and Figures, which however are not intended to limit the present invention.

### Example 1

In a specific example, the ink-composition is a metal-precursor molecular ink composition that has been previously prepared using the method described in J. Am. Chem. Soc., 2012, 134 (3), pp 1419-1421, which main parts are below reproduced.

1g of silver acetate was dissolved in 2.5ml of aqueous ammonium hydroxide. Then, 0.2ml of forming acid was added drop wise under stirring. Subsequently, the solution was centrifuged and, then, filtered through a 200nm pore size filter. The filtered solution was clear. Then, this metallic molecular ink was deposited in nylon polymer powder for making the ink-polymer composite. While the ink is suitable to be used for making conductive patterns on continuous solid substrates, it could not be readily used for the purpose of the present invention because it does not wet the powder particles, which are very hydrophobic. For this purpose, this ink was further mixed with 2ml of ethanol. Due to this modification, the ink did wet the powder bed, meaning that it was able to deposit a droplet of the ink on a layer of powder PA12 nylon, and the droplet dispersed and got absorbed by the powder PA12 nylon layer.

Then, the ink-PA12 nylon composite was irradiated with 800nm IR light coming from LED array. This wavelength is absorbed by the deposited ink but not by the powder PA12 nylon itself. The light causes the ink to heat resulting to its transformation to metallic silver and in this example the temperature was actually increased to >180°C causing also sintering of the powder PA12 nylon polymer. As result, a solid polymer-silver composite was formed at the region where ink was deposited. The polymer layer region where ink had not been deposited did not get sintered despite being also illuminated by the LED array. After the formation of the composite, the IR light source was switched off, and the sample was left to cool down. Then, the composite could easily be removed by hand from the not sintered part of the powder layer.

### Example 2

In this example, the metal-precursor molecular ink composition prepared in Example 1 was deposited across a rectangular region looking like a stripe, and the final composite had this stripe-like shape. The strip had good mechanical properties, meaning, that it could be handled by hand and be mechanically stretched and bended without breaking apart or being damaged. This stripe was conductive as shown in Figure 3. The electrical resistivity of the stripe, which as made had an electrical resistance of 13.4 ohms, did not change significantly when the stripe was bended, in the latter case the electrical resistance was 13.9 ohms.

### Example 3

This example differs from example 1 in that the metal-precursor molecular ink composition was applied across the entire surface area of the polymer powder layer. Then, using a scanning laser beam, wavelength 800nm, a composite-pattern of zig-zag shape was sintered.

### Example 4

This example differs from example 1 in that the metal-precursor molecular ink composition was deposited using an inkjet commercial printer, making a zigzag-shaped pattern on part of the surface of the polymer powder layer. Then, the entire powder polymer layer was illuminated with IR light using a LED array, and the zigzag-shaped pattern of the powder was transformed into a sintered composite pattern of same size and dimensions, which further appeared to exhibit metallic colour due to the metallization of the ink.

### Example 5

In another example, the electrically conductive inorganic network consists of copper which as an element is much more abundant in earth's crust and, thus, has lower financial cost compared to silver. An example of metal-precursor molecular ink composition suitable for printing copper-based composites with the method according to the present invention can be found in the literature, for example, in Advanced Materials Interfaces, 2015, 2, 1400448, and similarly made as follows: copper formate was partially or completely dissolved or dispersed in a solvent. A non-limited list of suitable solvents are water, dipropylene glycol, monoethylether and mixtures thereof. The prepared metal-precursor molecular ink compositions were subsequently deposited on a layer of powder polymer and be transformed to copper once the temperature of the polymer powder-ink mixture approaches or reaches or exceeds a temperature of 180°C. The printing method may be carried out under ambient environmental conditions or under a chemically inert atmosphere such under nitrogen or argon gas.

As described above in detail, the method according to the first aspect of the present invention has the following advantages:
- The 2D and 3D printing of electrically conductive composites comprising polymer and metal (or another type of inorganic material) retain the beneficial mechanical properties of polymers, specifically they are flexible and robust under external mechanical stress and the electrical conductivity of metal (or of another type of inorganic material). This allows for creating flexible and robust objects that are electrically conductive. Such objects can be used as stand-alone conductors of electricity or as respective components in electrical and electronic devices;
- The method of the invention does not require pre-formation of conductive inorganic particles, which in itself is tedious task since the morphology of these particles often needs to be engineered into forming complex shapes such as high aspect ratio rods and wires;
- The method of the invention has the advantage of being simpler compared to other ones which rely on the separate formation of a plastic continuous layer and the subsequent deposition of second metallic (electrically conductive) layer on top of the plastic layer;
- The two networks are formed substantially at the same time (as explained above, depending on the embodiment, steps c) and d) can be carried out at least in part simultaneously and/or at least in part sequentially) and, at least partially, percolate each other;
- The method of the invention avoids the potential problem of delamination and detachment of the polymer and metallic part of the composite;
- The method of the invention is simpler because the electrically conductive material is formed into the sintered polymer, compared to other methods which rely on the separate fabrication of metallic and polymeric components, or in general electrically conductive materials such as nano- and micro-particles, and then mixing of these materials with the polymer;
- The method of the invention allows for printing electrically conductive 2D and 3D objects, which can be used as standalone objects or as ones that are embedded within other printed complex objects;
- The method of the invention can be used in combination with other methods and instruments for 2D and 3D printing objects, and allows for creating our conductive objects directly inside other complex objects and while the latter are being created;

It is a matter of course that the features mentioned above can be used in other combinations in addition to those described, on in isolation, without departing from the scope of the invention as it is defined in the attached claims.

## Claims

1. A method for producing an electrically conductive composite, **characterized in that** the method comprises:
a) providing a bed of a polymer (P) in a non-continuous solid form;
b) providing a composition (C) on at least a region of said polymer bed (P) to wet and disperse across at least part of the thickness of the polymer bed (P), wherein said composition (C) comprises a chemical precursor dissolved in a liquid medium, wherein said liquid medium is made to inhibit a chemical reaction of said chemical precursor into forming an electrically conductive inorganic component (M), and wherein at least one of said composition, by-products formed therefrom, said chemical precursor, chemical intermediates, and said electrically conductive inorganic component (M) is an electromagnetic radiation absorber;
c) forming said electrically conductive inorganic component (M) from a chemical reaction of the chemical precursor, by at least evaporating said liquid medium, wherein said electrically conductive inorganic component (M) forms an at least partially continuous electrically conductive network (MN); and
d) exposing to electromagnetic radiation at least said electromagnetic radiation absorber, to photothermally generate heat to sinter at least those portions of said polymer bed (P) in thermal contact therewith, to form an at least partially continuous polymer network (PN), wherein said at least partially continuous electrically conductive network (MN) and said at least partially continuous polymer network (PM) at least partially percolate each other.

2. A method according to claim 1, wherein said formation of the electrically conductive inorganic component of step c) further comprises heating solid residues (SR) formed from the chemical precursor upon said evaporation of the liquid medium, wherein said solid residues (SR) contain said electrically conductive inorganic component (M) and non-electrically conductive elements, to at least partially break down said solid residues (SR) and remove said non-electrically conductive elements therefrom.

3. A method according to claim 2, wherein at least part of step c) is performed simultaneously to step d), so that at least heat used for said heating of said solid residues (SR) is obtained from said photothermal heat generated by the electromagnetic radiation absorber.

4. A method according to claim 3, wherein all of step c) is performed simultaneously to step d), so that also heat used for said evaporation of the liquid medium is obtained from said photothermal heat generated by the electromagnetic radiation absorber.

5. A method according to claim 1 or 2, wherein steps c) and d) are performed sequentially, so that said electromagnetic radiation absorber exposed to electromagnetic radiation at step d) is said electrically conductive inorganic component (M) formed at step c).

6. A method according to any of the previous claims, wherein said electrically conductive inorganic component (M) comprises a plurality of inorganic particles, the method further comprising at least one of aggregating, sintering, and annealing said inorganic particles to form said at least partially continuous electrically conductive network (MN), from heat applied at said step c) and/or from said photothermal heat generated by the electromagnetic radiation absorber.

7. A method according to any of the previous claims, wherein said electromagnetic radiation absorber is made to absorb at least two times more strongly said electromagnetic radiation compared to said polymer.

8. A method according to any of the previous claims, wherein said electromagnetic radiation absorber is not optically resonant.

9. A method according to any of claims 1 to 7, wherein said electromagnetic radiation absorber is optically resonant to at least a specific wavelength, so that when exposed at step d) to an electromagnetic radiation having said specific wavelength, the electromagnetic radiation absorber optically resonates to heat up.

10. A method according to any of the previous claims, wherein said chemical precursor is in form of solvated individual metal atoms or ions or/and in form of molecular metallic complexes.

11. A method according to any of the previous claims, wherein the composition (C) is deposited on at least said region of the polymer bed (P) by droplet deposition.

12. A method according to any of previous claims, wherein the electromagnetic radiation to which at least said electromagnetic radiation absorber is exposed in step d) is selected to be of a wavelength range from 250nm to 4000nm, preferably from 350nm to 2000nm.

13. A method according to any of the previous claims, wherein said percolated polymer and electrically conductive networks (PN, MN) form a base layer of the composite, the method comprising producing a three-dimensional object using a layer-by-layer deposition process, by repeating a step a) of providing at least a further bed of a polymer in a non-continuous solid form over said base composite layer, and repeating steps b), c) and d) with respect to said further polymer bed.

14. A system for producing an electrically conductive composite, **characterized in that** the system comprises:
- at least one supplier device for providing:
- a polymer bed (P) in a non-continuous solid form; and
- a composition (C) on at least a region of said polymer bed to wet and disperse across at least part of the thickness of the polymer bed (P), wherein said composition (C) comprises a chemical precursor dissolved in a liquid medium, wherein said liquid medium is made to inhibit a chemical reaction of said chemical precursor into forming an electrically conductive inorganic component (M), and wherein at least one of said composition (C), by-products formed therefrom, said chemical precursor, chemical intermediates, and said electrically conductive inorganic component (M) is an electromagnetic radiation absorber;
- a supply of polymer in a non-continuous solid form and a supply of said composition (C), to feed said at least one supplier;
- evaporating means for evaporating said liquid medium, to at least collaborate in forming said electrically conductive inorganic component (M) from a chemical reaction of the chemical precursor, to form an at least partially continuous electrically conductive network (MN) with said electrically conductive inorganic component (M);
- a controllable electromagnetic radiation source for exposing at least said electromagnetic radiation absorber to electromagnetic radiation, in order to photothermally generate heat to sinter at least those portions of said polymer bed (P) in thermal contact therewith, to form an at least partially continuous polymer network (PN), wherein said at least partially continuous electrically conductive network (MN) and said at least partially continuous polymer network (PN) at least partially percolate each other; and
- at least one controller adapted to control said at least one supplier device to provide said polymer bed (P) and said composition (C), and said controllable radiation source to emit said electromagnetic radiation to expose the electromagnetic radiation absorber.

15. A package for producing an electrically conductive composite, **characterized in that** the package comprises, enclosed therein, a composition (C) that comprises a chemical precursor dissolved in a liquid medium, wherein said liquid medium is made to inhibit a chemical reaction of said chemical precursor into forming an electrically conductive inorganic component, wherein at least one of said composition, by-products formed therefrom, said chemical precursor, chemical intermediates, and said electrically conductive inorganic component is an electromagnetic radiation absorber, and wherein the package is configured and arranged to cooperate with the at least one supplier device of the system of claim 14 for providing the composition (C) by extracting the same from the package.
